# EUROPEAN PATENT SPECIFICATION

(11) **EP 2 984 923 B1**
(45) Date of publication and mention of the grant of the patent: **04.11.2020**
(21) Application number: 14181073.9
(22) Date of filing: 14.08.2014
(51) Int. Cl.: A01G 3/053, F16H 57/04, F16H 21/18

(54) **Eccentric rotor with lubrication for a cutting apparatus and a method for lubricating the same**
Aussermittiger Rotor mit Schmiervorrichtung für eine Schneidvorrichtung und entsprechendes Verfahren
Rotor excentrique avec lubrification pour appareil de découpage et procédé de lubrification correspondand

(43) Date of publication of application: 17.02.2016
(73) Proprietor: Robert Bosch GmbH, 70442 Stuttgart (DE)
(72) Inventor: Thornton, Darren, Mistley, Essex Co11 1UD (GB); Gilbert, Austen, Capel St Mary, Ipswich Suffolk IP9 2ES (GB)

(56) References cited:
- EP-A1- 1 493 317
- US-A1- 2005 009 659
- US-A1- 2011 315 416

## Description

The invention relates to lubrication for eccentric rotors, and in particular lubrication for eccentric rotors in cutting apparatus such as hedge cutters.

Hedge cutters with elongate blades which reciprocate with respect to each other are well known, with either one blade being fixed and the other caused to reciprocate or both blades reciprocating in an equal and opposite manner. The blades are driven by a cam element driven by the output shaft of an electric motor or small engine.

A typical example of such an arrangement is disclosed in EP2666389. An arrangement with two reciprocating blades is described with a mechanism for enacting reciprocation using a rotor, driven by a prime mover such as an electric or petrol motor, whose rotational motion is converted into reciprocating translational motion using two eccentric discs, which are received by an aperture or "eye" in each blade section.

The arrangement is very effective for enabling cutting using reciprocating blades. However, a problem with this arrangement is the requirement for lubrication of the eccentric discs and blades. Current hedge cutters require disassembly of the eccentric rotor and blade arrangement in order to provide the necessary lubrication. This is inconvenient for a professional user, whose time is important. The non-professional user may experience difficulties in the disassembly and reassembly and may as a result be deterred from implementing the necessary lubrication with a detrimental effect on the life of the product. Furthermore reference is made to the documents US20050009659 A1 and EP1493317 A1.

Accordingly, in a first aspect, the present invention provides an eccentric rotor for a cutting apparatus comprising a drive shaft and first and second eccentric discs mounted on the drive shaft and projecting radially therefrom, characterised in that a lubrication channel is provided within the drive shaft which extends from an inlet, preferably provided at or adjacent to one end of the drive shaft, to an outlet provided adjacent to at least one of the first and second eccentric discs.

Preferably, the outlet is provided in the circumferential surface of the drive shaft.

In preferred arrangements, the lubrication channel comprises a main channel and an outlet channel extending from the main channel to the outlet. The main channel may extend substantially coaxially with the axis of rotation of the drive shaft. The inlet is preferably centred on the end of the drive shaft and aligned with the axis of rotation of the drive shaft. The outlet channel may extend substantially radially from the main channel to the outlet.

In preferred embodiments, the main channel will terminate at a terminating point. Preferably, the terminating point is substantially dome-shaped. The terminating point is preferably spaced axially from the outlet.

Preferably, the first and second eccentric discs are mounted on the drive shaft intermediate the ends of the drive shaft, dividing the drive shaft into upper and lower portions. The inlet is preferably located in the lower portion and the outlet is located in the upper portion.

A second outlet may be provided adjacent to at least one of the first and second eccentric discs. In this arrangement, the first outlet may be adjacent to one of the first and second eccentric discs and the second outlet may be adjacent to the other of the first and second eccentric discs. In the embodiment above in which the inlet is located in the lower portion of the drive shaft and the outlet is located in the upper portion, the second outlet is preferably located in the lower portion.

The invention extends to a cutting apparatus comprising an eccentric rotor as described above. Preferably, the inlet is accessible when the apparatus is fully assembled.

The invention also extends to a method for lubricating at least one of the eccentric discs of an eccentric rotor for a cutting apparatus comprising a drive shaft and first and second eccentric discs mounted on the drive shaft and projecting radially therefrom, characterised in that a lubricant is fed through a lubrication channel which is provided within the drive shaft and extends from an inlet, preferably provided at or adjacent to one end of the drive shaft, to an outlet provided adjacent to at least one of the first and second eccentric discs by additional means.

In preferred embodiments, the additional means may be manual or automatic. Preferably the additional means comprises a detachable grease gun or a non detachable automatic grease applying apparatus. The non detachable automatic grease applying apparatus may be installed with a grease reservoir within the cutting apparatus.

The above and other aspects of the present invention will be described, by way of example only, with reference to the following diagrams, in which:
Figure 1 is a perspective view of a hedge cutter with reciprocating blades;
Figure 2 is an exploded view of the rotor and blade arrangement;
Figure 3 is a side view of a drive shaft according to the prior art;
Figure 4 is a cross-sectional view of a drive shaft with a lubricating channel according an embodiment of the invention;
Figure 5 is a cross sectional view of the embodiment of Figure 4 during lubrication;
Figure 6 is a cross sectional view of a drive shaft with lubricating channel according to another embodiment of the invention;
Figure 7 is a side view of a drive shaft in accordance with another embodiment of the invention;
Figure 8 is a cross sectional stress map of the lubricating channel of the embodiment of Figure 7 when in use;
Figure 9 is a cross sectional view of a drive shaft of another embodiment of the invention;
Figure 10 is a cross sectional stress map of the lubricating channel of the embodiment of Figure 9 when in use;
Figure 11 is a cross section of a drive shaft according to another embodiment of the invention;
Figure 12 is a cross sectional stress map of the embodiment of Figure 11 in use; and
Figure 13 is a plan view stress map of the embodiment of Figure 11 in use.

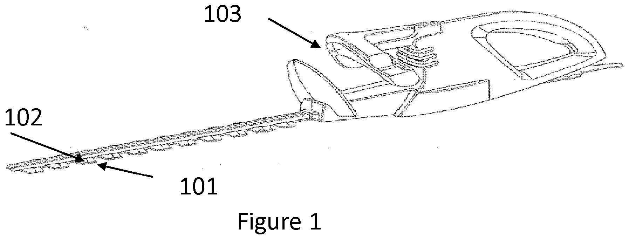

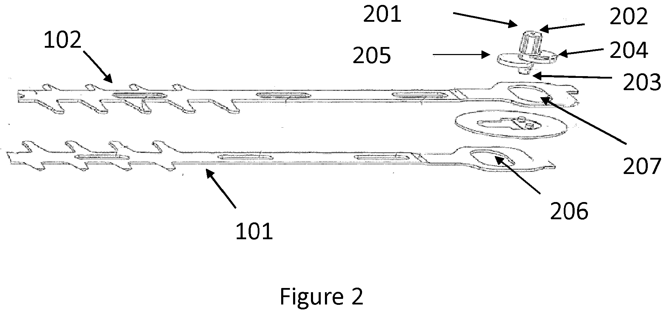

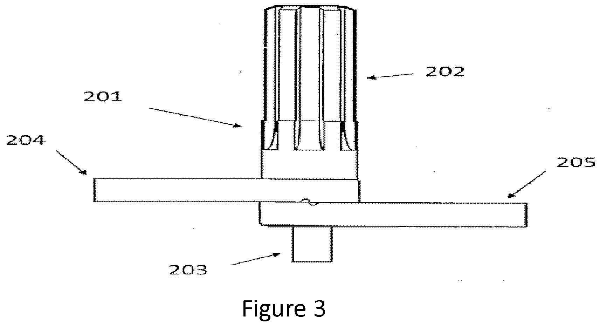

Figure 1 shows a typical electric hedge cutter. The hedge cutter has a bottom blade 101 and an upper blade 102 which are caused to reciprocate simultaneously in an equal and opposite manner with respect to the housing 103 and to each other by means of an electric motor within the housing unit. The rotational motion of the electric motor is converted into translational reciprocating motion by means of an eccentric rotor, typically as shown in figures 2 and 3. The eccentric rotor comprises a shaft 201 with an upper portion 202 and a lower portion 203 and two eccentric discs 204, 205. Typically the upper portion of the shaft is directly connected to the output shaft of a gearbox, a clutch or directly to a motor, and the lower portion is mounted in a bearing to provide stability for the arrangement. Typically the upper portion is wider than the lower, since it is subject to greater stresses. Each blade 101, 102 has an aperture 206, 207 which receives an eccentric disc. The rotation the shaft causes rotation of the eccentric discs, which causes reciprocating motion of the blade.

Figure 3 is a side view of a section of the drive shaft 201 according to the prior art, showing the eccentric discs 204, 205, the wider upper portion 202 of the drive shaft and the narrower lower portion 203 of the drive shaft 201.

Lubrication of this blade and rotor arrangement is essential for the working of the hedge cutter and for prolonging its useful life. The conventional disassembly of such a device for lubrication is difficult for the amateur gardener and inconvenient for the amateur and professional alike. However, it is generally considered in the art that the inclusion of lubrication channels in the drive shaft risks weakening the structure and compromising the integrity and working life of the device. The present invention discloses that correct positioning of lubrication holes can overcome this problem, whilst still enabling lubricating medium to be brought into contact with rotor and eccentric discs alike.

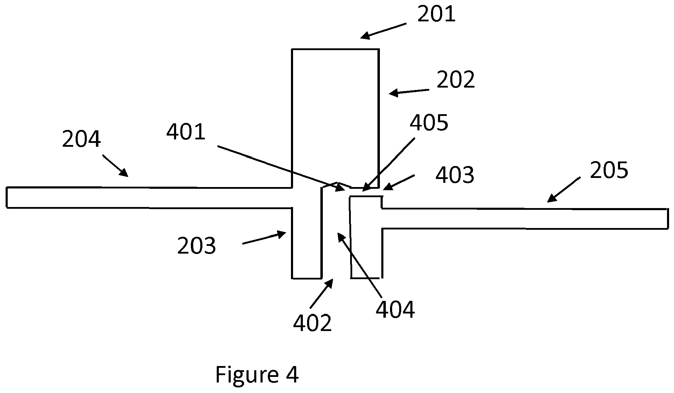

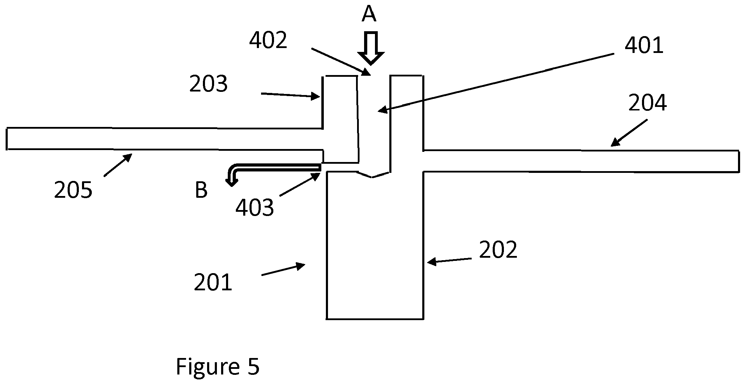

Figure 4 is a cross-sectional view of a drive shaft with an eccentric disc arrangement according to an embodiment of the invention. This embodiment comprises a lubrication channel 401, drilled axially into drive shaft 201, with lubrication inlet 402 and a lubrication outlet 403 extending from the lubrication channel. In an embodiment, lubrication channel 401 comprises main channel 404 and at least one side channel 405. When lubrication is required, the hedge cutter may be inverted and lubrication medium (e.g. oil or grease) supplied to inlet 402. This process is shown in Figure 5, with lubrication medium being supplied to lubrication inlet 402 (arrow A), which is in fluid communication with outlet 403, resulting in lubrication medium exiting from lubrication outlet 403 (arrow B) and hence covering the eccentric discs 204, 205 in use.

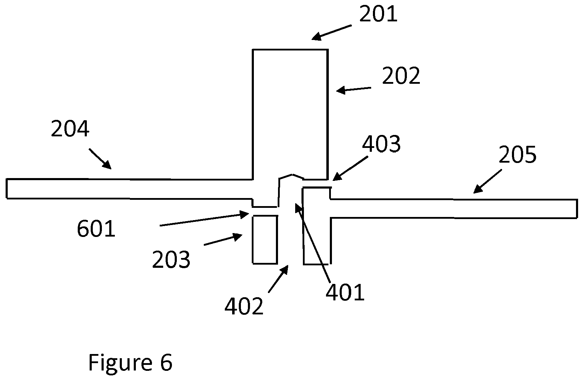

Figure 6 is a cross sectional view of another embodiment of the invention, with a second lubrication outlet 601. Having two lubrication outlets helps to ensure both eccentric discs are evenly lubricated.

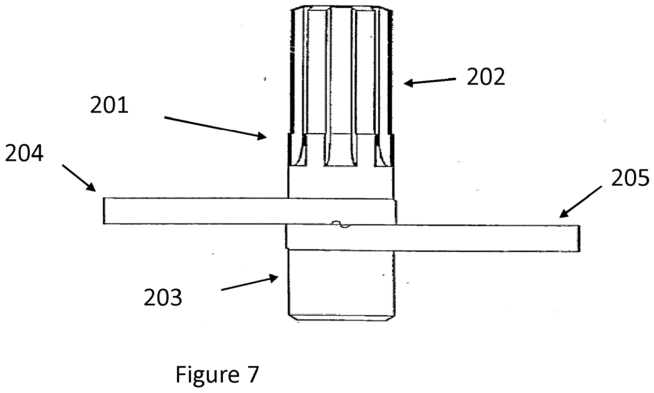

The provision of a lubricating channel however potentially creates problems in that the presence of the channels can weaken the structure of the drive shaft, causing excess stresses and ultimately reducing the life of the product. In another embodiment of the invention therefore the drive shaft is strengthened by having both upper and lower portions of the shaft substantially the same diameter. In prior art systems, such as that of EP 2266389, the majority of the stress of rotation is taken by the upper shaft. The strengthening of the lower shaft assists in overcoming structural weakness introduced by the lubrication channels. Figure 7 is a side view of this embodiment, showing upper portion 202 and lower portion 203 of substantially equal diameter.

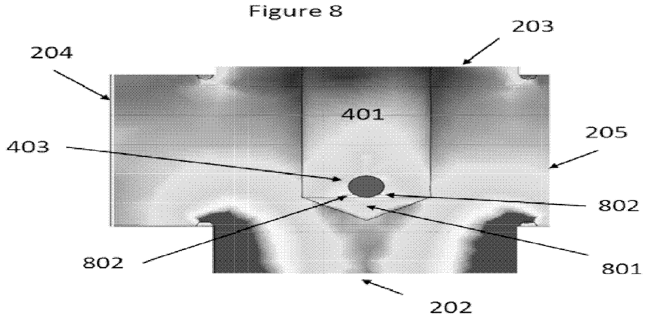

In spite of the strengthening of the drive shaft by having equal upper and lower portions, problems may still arise from the presence of the lubricating channel, in the form of stresses in the regions around the channel and particularly at any corners of such a channel. Figure 8 is a cross sectional view of the stresses induced by the rotation of the drive shaft, showing an axial view of one of the lubrication outlets 403. In this embodiment, the outlet is located substantially at the terminating point 801 of lubrication channel 401. Regions of high stress 802 are located around lubrication outlet 403. The presence of high stresses can cause stress fractures and hence shorten the life of the product.

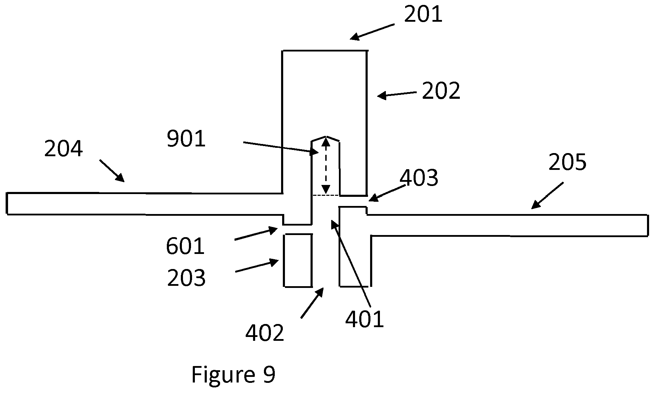

In yet another embodiment of the invention, the lubrication channel is longer than in the embodiment of Figure 8. Figure 9 is a cross sectional view of this embodiment, in which the outlet is spaced from the terminating point of the main channel, for example by a dead-end section 901. This additional section moves the high stress region associated with the terminating point away from the outlet. Typically, the terminating point may be spaced from the outlet by about 1-10mm, although only 1-2mm spacing may be necessary in some cases to achieve the desired result.

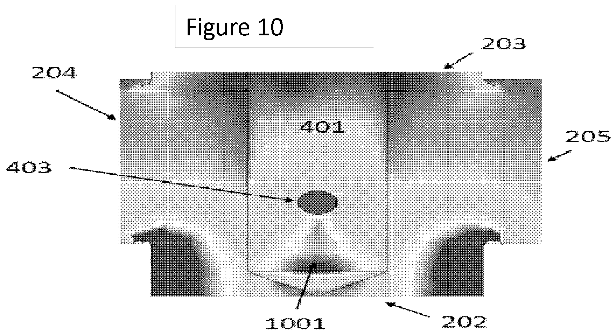

Figure 10 is a cross sectional view showing the stress map of the embodiment of Figure 9 when in use. It can be seen that the high stress region 1001 is now away from the lubricating outlet 403. This reduces the possibility of stress fractures around the lubricating outlet.

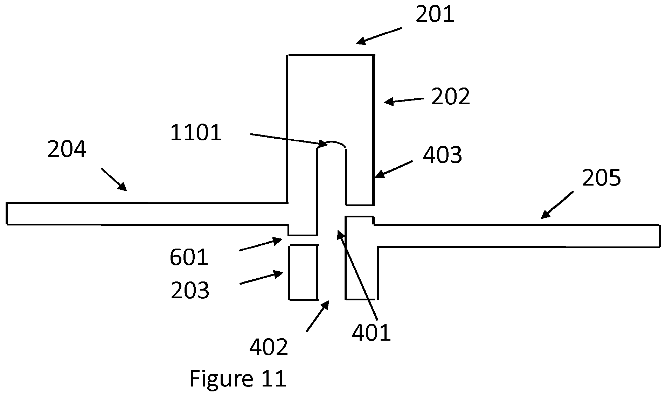

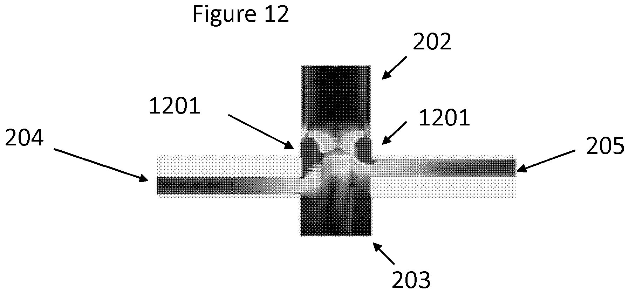

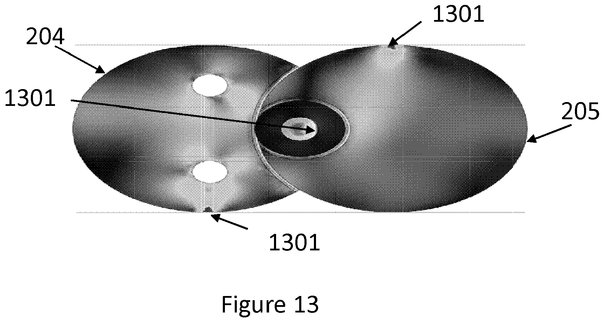

Figure 11 is a cross section of yet another embodiment of the invention. In this embodiment, the termination of the lubricating channel comprises a dome shape 1101. This dome shape eliminates sharp corners around which stresses can occur, thus further reducing the possibility of the development of stress fractures at these points. The success of the combination of the widening of the lower drive shaft, the dead-end section of the lubricating channel and the rounding of the lubricating channel terminating point can be seen in the stress patterns in the resulting drive shaft when in action. Figure 12 is a cross sectional stress map for the embodiment of Figure 11 in use, showing the high stress regions 1201. Figure 13 is a plan view stress map for the embodiment of Figure 11 in use, showing high stress regions 1301. In both cases, the stress maps are the same as for eccentrics with no lubrication channels. Consequently, the addition of the lubrication channels and the outlets can be used to provide easy lubrication without compromising the structural integrity of the drive shaft.

The present invention is not limited to the details of the embodiments described above but is limited only by the appended claims. The person skilled in the art will appreciate that any combination of stress reducing adaptations may be used, for example a dome shaped terminating point may be used in combination with outlets substantially located at the end of the lubricating channel.

## Claims

1. An eccentric rotor for a cutting apparatus such as hedge cutters comprising a drive shaft (201) and first and second eccentric discs (204,205) mounted on the drive shaft (201) and projecting radially therefrom, **characterised in that** a lubrication channel (401) is provided within the drive shaft (201) which extends from an inlet (402), preferably provided at or adjacent to one end of the drive shaft (201), to an outlet (403), whereby the outlet (403) is provided adjacent to at least one of the first and second eccentric discs (204,205).

2. The eccentric rotor of claim 1, wherein the outlet (403) is provided in the circumferential surface of the drive shaft (201).

3. The eccentric rotor of claim 1 or 2, wherein the lubrication channel (401) comprises a main channel (404) and an outlet channel (405) extending from the main channel to the outlet (403).

4. The eccentric rotor of claim 3, wherein the main channel (404) extends substantially coaxially with the axis of rotation of the drive shaft (201).

5. The eccentric rotor of claim 4, wherein the inlet (402) is centred on the end of the drive shaft (201) and aligned with the axis of rotation of the drive shaft.

6. The eccentric rotor of claim 3, 4 or 5, wherein the outlet channel (405) extends substantially radially from the main channel (404) to the outlet (403).

7. The eccentric rotor of any of claims 3 to 6, wherein the main channel (404) terminates at a terminating point (801) preferably being substantially dome-shaped and being spaced axially from the outlet (403).

8. The eccentric rotor of any preceding claim, wherein the first and second eccentric discs (204,205) are mounted on the drive shaft (201) intermediate the ends of the drive shaft, dividing the drive shaft into upper and lower portions (202,203), and wherein the inlet (402) is located in the lower portion (203) and the outlet (403) is located in the upper portion (202).

9. The eccentric rotor of any preceding claim, wherein at least a second outlet (601) is provided adjacent to at least one of the first and second eccentric discs (204,205).

10. The eccentric rotor of claim 9, wherein the first outlet (403) is adjacent to one of the first and second eccentric discs (204,205) and the second outlet is adjacent to the other of the first and second eccentric discs (204,205).

11. The eccentric rotor of claim 8 and claim 9 or 10, wherein the second outlet (601) is located in the lower portion (203).

12. A cutting apparatus comprising an eccentric rotor as claimed in any preceding claim.

13. A method for lubricating at least one of the eccentric discs (204,205) of an eccentric rotor for a cutting apparatus such as hedge cutters comprising a drive shaft (201) and first and second eccentric discs (204,205) mounted on the drive shaft (201) and projecting radially therefrom, **characterised in that** a lubricant is fed through a lubrication channel (401) which is provided within the drive shaft (201) and extends from an inlet (402), preferably provided at or adjacent to one end of the drive shaft (201), to an outlet (403), whereby the outlet (403) is provided adjacent to at least one of the first and second eccentric discs (204,205) by additional means.

14. The method for lubricating according to claim 13, wherein the additional means are manual or automatic means, preferably a detachable grease gun or a non detachable automatic grease applying apparatus, preferably installed with a grease reservoir within the cutting apparatus.

## Patentansprüche

1. Exzenterrotor für eine Schneidvorrichtung wie Heckenschneider, umfassend eine Antriebswelle (201) und an der Antriebswelle (201) angebrachte und radial davon hervorstehende erste und zweite Exzenterscheiben (204, 205), **dadurch gekennzeichnet, dass** ein Schmierkanal (401) in der Antriebswelle (201) bereitgestellt ist, der sich von einem Einlass (402), der vorzugsweise an oder angrenzend an ein Ende der Antriebswelle (201) bereitgestellt ist, zu einem Auslass (403) erstreckt, wobei der Auslass (403) angrenzend an mindestens eine der ersten und zweiten Exzenterscheiben (204, 205) bereitgestellt ist.

2. Exzenterrotor nach Anspruch 1, wobei der Auslass (403) in der Umfangsfläche der Antriebswelle (201) bereitgestellt ist.

3. Exzenterrotor nach Anspruch 1 oder 2, wobei der Schmierkanal (401) einen Hauptkanal (404) und einen Auslasskanal (405), der sich von dem Hauptkanal zu dem Auslass (403) erstreckt, umfasst.

4. Exzenterrotor nach Anspruch 3, wobei sich der Hauptkanal (404) im Wesentlichen koaxial mit der Drehachse der Antriebswelle (201) erstreckt.

5. Exzenterrotor nach Anspruch 4, wobei der Einlass (402) an dem Ende der Antriebswelle (201) zentriert und mit der Drehachse der Antriebswelle gefluchtet ist.

6. Exzenterrotor nach Anspruch 3, 4 oder 5, wobei sich der Auslasskanal (405) im Wesentlichen radial von dem Hauptkanal (404) zu dem Auslass (403) erstreckt.

7. Exzenterrotor nach einem der Ansprüche 3 bis 6, wobei der Hauptkanal (404) an einem Endpunkt (801) endet, der vorzugsweise im Wesentlichen kuppelförmig ist und axial von dem Auslass (403) beabstandet ist.

8. Exzenterrotor nach einem der vorhergehenden Ansprüche, wobei die ersten und zweiten Exzenterscheiben (204, 205) an der Antriebswelle (201) zwischen den Enden der Antriebswelle angebracht sind, sodass sie die Antriebswelle in obere und untere Abschnitte (202, 203) unterteilen, und wobei sich der Einlass (402) in dem unteren Abschnitt (203) befindet und der Auslass (403) in dem oberen Abschnitt (202) befindet.

9. Exzenterrotor nach einem der vorhergehenden Ansprüche, wobei mindestens ein zweiter Auslass (601) angrenzend an mindestens eine der ersten und zweiten Exzenterscheiben (204, 205) bereitgestellt ist.

10. Exzenterrotor nach Anspruch 9, wobei der erste Auslass (403) an eine der ersten und zweiten Exzenterscheiben (204, 205) angrenzt und der zweite Auslass an die andere der ersten und zweiten Exzenterscheiben (204, 205) angrenzt.

11. Exzenterrotor nach Anspruch 8 und Anspruch 9 oder 10, wobei sich der zweite Auslass (601) in dem unteren Abschnitt (203) befindet.

12. Schneidvorrichtung, umfassend einen Exzenterrotor nach einem der vorhergehenden Ansprüche.

13. Verfahren zum Schmieren mindestens einer der Exzenterscheiben (204, 205) eines Exzenterrotors für eine Schneidvorrichtung wie Heckenschneider, umfassend eine Antriebswelle (201) und an der Antriebswelle (201) angebrachte und radial davon hervorstehende erste und zweite Exzenterscheiben (204, 205), **dadurch gekennzeichnet, dass** ein Schmiermittel durch einen Schmierkanal (401) gespeist wird, der in der Antriebswelle (201) bereitgestellt ist und sich von einem Einlass (402), der vorzugsweise an oder angrenzend an ein Ende der Antriebswelle (201) bereitgestellt ist, zu einem Auslass (403) erstreckt, wobei der Auslass (403) durch zusätzliche Mittel angrenzend an mindestens eine der ersten und zweiten Exzenterscheiben (204, 205) bereitgestellt ist.

14. Verfahren zum Schmieren nach Anspruch 13, wobei die zusätzlichen Mittel manuelle oder automatische Mittel sind, vorzugsweise eine abnehmbare Schmierpresse oder eine nicht abnehmbare automatische Schmiermittelaufbringungsvorrichtung, die vorzugsweise mit einem Schmiermittelbehälter in der Schneidvorrichtung eingebaut ist.

## Revendications

1. Rotor excentrique pour un appareil de coupe tel qu'un taille-haie comprenant un arbre d'entraînement (201) et des premier et deuxième disques excentriques (204, 205) montés sur l'arbre d'entraînement (201) et se projetant radialement à partir de celui-ci, **caractérisé en ce qu'**un canal de lubrification (401) est disposé à l'intérieur de l'arbre d'entraînement (201) qui s'étend à partir d'une entrée (402), de préférence disposée au niveau ou à côté d'une extrémité de l'arbre d'entraînement (201), jusqu'à une sortie (403), la sortie (403) étant disposée à côté d'au moins un disque parmi les premier et deuxième disques excentriques (204, 205).

2. Rotor excentrique de la revendication 1, dans lequel la sortie (403) est disposée dans la surface circonférentielle de l'arbre d'entraînement (201).

3. Rotor excentrique de la revendication 1 ou 2, dans lequel le canal de lubrification (401) comprend un canal principal (404) et un canal de sortie (405) s'étendant à partir du canal principal jusqu'à la sortie (403).

4. Rotor excentrique de la revendication 3, dans lequel le canal principal (404) s'étend essentiellement coaxialement à l'axe de rotation de l'arbre d'entraînement (201).

5. Rotor excentrique de la revendication 4, dans lequel l'entrée (402) est centrée sur l'extrémité de l'arbre d'entraînement (201) et alignée avec l'axe de rotation de l'arbre d'entraînement.

6. Rotor excentrique de la revendication 3, 4 ou 5, dans lequel le canal de sortie (405) s'étend essentiellement radialement à partir du canal principal (404) jusqu'à la sortie (403).

7. Rotor excentrique de l'une quelconque des revendications 3 à 6, dans lequel le canal principal (404) se termine au niveau d'un point de terminaison (801) qui est de préférence essentiellement en forme de dôme et qui est espacé axialement de la sortie (403).

8. Rotor excentrique de l'une quelconque des revendications précédentes, dans lequel les premier et deuxième disques excentriques (204, 205) sont montés sur l'arbre d'entraînement (201) entre les extrémités de l'arbre d'entraînement, divisant l'arbre d'entraînement en portions supérieure et inférieure (202, 203), et dans lequel l'entrée (402) est située dans la portion inférieure (203) et la sortie (403) est située dans la portion supérieure (202).

9. Rotor excentrique de l'une quelconque des revendications précédentes, dans lequel au moins une deuxième sortie (601) est disposée à côté d'au moins un disque parmi les premier et deuxième disques excentriques (204, 205).

10. Rotor excentrique de la revendication 9, dans lequel la première sortie (403) est adjacente à un disque parmi les premier et deuxième disques excentriques (204, 205) et la deuxième sortie est adjacente à l'autre disque parmi les premier et deuxième disques excentriques (204, 205).

11. Rotor excentrique de la revendication 8 et de la revendication 9 ou 10, dans lequel la deuxième sortie (601) est située dans la portion inférieure (203).

12. Appareil de coupe comprenant un rotor excentrique tel que revendiqué dans l'une quelconque des revendications précédentes.

13. Procédé de lubrification d'au moins un des disques excentriques (204, 205) d'un rotor excentrique pour un appareil de coupe tel qu'un taille-haie comprenant un arbre d'entraînement (201) et des premier et deuxième disques excentriques (204, 205) montés sur l'arbre d'entraînement (201) et se projetant radialement à partir de celui-ci, **caractérisé en ce qu'**un lubrifiant est introduit au travers d'un canal de lubrification (401) qui est disposé à l'intérieur de l'arbre d'entraînement (201) et s'étend à partir d'une entrée (402), de préférence disposée au niveau ou à côté d'une extrémité de l'arbre d'entraînement (201), jusqu'à une sortie (403), la sortie (403) étant disposée à côté d'au moins un disque parmi les premier et deuxième disques excentriques (204, 205), par des moyens supplémentaires.

14. Procédé de lubrification selon la revendication 13, dans lequel les moyens supplémentaires sont des moyens manuels ou automatiques, de préférence un pistolet graisseur détachable ou un appareil d'application de graisse automatique non détachable, de préférence installé avec un réservoir de graisse à l'intérieur de l'appareil de coupe.
